# EUROPEAN PATENT SPECIFICATION

(11) **EP 1 576 888 B1**
(45) Date of publication and mention of the grant of the patent: **05.11.2008**
(21) Application number: 04251580.9
(22) Date of filing: 19.03.2004
(51) Int. Cl.: A23G 1/16, A23G 1/12

(54) **Chocolate refining apparatus and method**
Vorrichtung und Methode zum Raffinieren von Schokolade
Dispositif de raffinage de chocolat et son procédé

(43) Date of publication of application: 21.09.2005
(73) Proprietor: Low & Duff (Developments) Ltd, Arbroath, DD11 3RD (GB)
(72) Inventor: Anderson, Stuart Simpson, Arbroath, DD11 3RD (GB)
(74) Representative: Campbell, Arlene

(56) References cited:
- GB-A- 641 038
- GB-A- 2 317 840
- US-A- 5 419 635
- US-A- 6 129 008

## Description

This invention relates to an apparatus and method for use in the production of chocolate and, more specifically, to an apparatus and method for the refining of substances to manufacture chocolate, chocolate compounds and substitutes for use in the confectionery, biscuit and ice cream industries.

Chocolate, chocolate compounds and substitutes may be produced by refining a mixture of cocoa liquor and, depending on the final product required, cocoa butter, sugar, milk powders and/or vegetable fats. The refining operation may be undertaken within a device known as a conche which comprises a stationery drum with an axial rotor provided therein. The rotor is provided with a plurality of radial arms each carrying at its free end a grinding bar while the interior of the drum is lined with similar grinding bars. In use, rotation of the rotor causes the raw materials within the drum to be ground between the grinding bars on the rotor arms and the internal grinding bars to refine the ingredients. The forces exerted on the raw materials by the bars may be varied by moving the grinding bars relative to the rotor.

Such a device is known from GB-2 317 840.

During the refining process using such known apparatus, the mass of raw materials is moved around the interior of the conch by the arms of the rotor. If the mass of raw materials is not kept mobile, volatile acids within the ingredients are not released from the mass and this can adversely affect the quality of the finished product and also lead to increased production time in running the apparatus to ensure that all such volatile acids are released from the ingredients.

For improving the mixing in a chocolate conche, it is known from US-6 129 008 to provide an impeller inside the drum.

It is therefore an object of the present invention to provide an improved apparatus for refining raw materials for use in making chocolate and a method of using same. It is a further object of the present invention to provide an apparatus in which the raw materials are kept mobile within he conch in order to release volatile acids within the mixture. Also, a further object is to provide an apparatus in which the total time taken for the refining operation is reduced, thereby increasing the efficiency of the apparatus.

As a further, additional object of the invention, it is desirable to provide an apparatus and method for refining materials for making chocolate in which the fat content of the raw materials can be reduced to around 21 % because by keeping the mixture of ingredients mobile in the conch this allows the use of dryer raw materials than is currently possible with known apparatus.

According to one aspect of the present invention there is provided an apparatus for refining raw materials, particularly for use in the refining of chocolate, said apparatus comprising a drum within which is mounted a drive shaft carrying a rotor, said rotor being provided with a least one grinding bar, said drum being provided with at least one corresponding grinding bar on the interior surface thereof and further including an impeller which acts independently of the grinding bars for circulating and shearing the raw materials within the drum.

Recirculating the ingredients within the drum leads to a secondary shearing operation being carried out on the ingredients and drives the raw materials between the grinding bars of the drum and the rotor where primary shearing of the raw materials during the refining process occurs.

Preferably, said impeller may comprise two blades, and said impeller may be mounted on the shaft of a motor which shaft passes through a side wall of the drum,

Conveniently, the shaft is mounted through bearings providing a seal in the wall of the drum.

Advantageously, a microprocessor is provided to enable the operator to change the operating conditions of the apparatus to suit the final product required.

According to a further aspect of the present invention, there is provided a method of refining ingredients for use in the manufacture of chocolate products, said method comprising the steps of placing the ingredients in a drum, said drum being provided with at least one grinding bar on the inner surface thereof and a rotor within the drum, said rotor having at least one grinding bar provided thereon, an impeller which acts independently of the grinding bars, shearing the ingredients by grinding them between the grinding bars on the rotor and the drum and causing the impeller to shear the ingredients while recirculating the ingredients within the drum in a direction transverse to the direction of rotation of the rotor.

By providing a method having a double shearing operation, i.e. both by the impeller and by the grinding bars on the rotor and the inner surface of the drum, the ingredients within the drum are refined more quickly and more efficiently than is possible using existing refining methods.

Embodiments of the present invention will now be described, by way of example only, with reference to the accompanying drawings in which:-
Fig 1 is a cross-sectional view of a refining apparatus according to the first aspect of the present invention, and
Fig 2 is an end elevation of the refining apparatus of Figure 1.

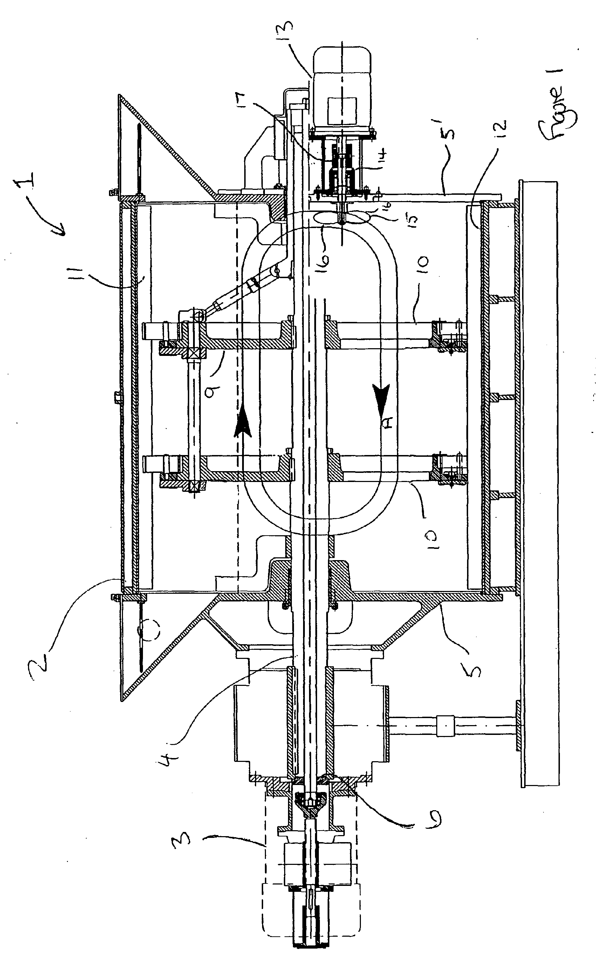

Turning now to the Figures, there is shown in Figure 1 a conche 1 comprising a drum 2 which is sized to receive a suitable amount of raw ingredients for use in the production of chocolate. A motor 3 is mounted adjacent to the outer wall of the conche and comprises a drive shaft 4 which projects axially into the drum through one of the side walls 5 of the drum. Bearings 6 are provided around the drive shaft to facilitate rotation of the drive shaft through the housing of the motor. The drum is provided with a hopper 7 in the upper portion 8 thereof to enable raw materials to be introduced into the drum for refining.

The drive shaft carries thereon a rotor 9. The rotor comprises one or more radial arms 10 of which two are shown in Figure 1. The distance between the radial arms may be adjusted depending upon the ingredients to be refined in the drum and the final product to be obtained from the refining process.

At least one, and preferably a set of grinding bars 11 is mounted on the free ends of the arms 10 of the rotor and may comprise, for example, a strip of hardened steel. The set of grinding bars 11 are provided substantially parallel to the axis of the drive shaft 4 and extends for substantially the length of the interior of the drum 2. The grinding bars are fixed to the free ends of the rotor arms by known fixing means which are suitable for operation in the hostile environment which exists within the drum when chocolate refining is taking place.

The interior of the drum is also provided with at least one, and preferably a set of lining bars 12 which co-operate with the sets of grinding bars 11 on the arms 10 of the rotor 9 in order to process raw materials which pass between the sets of grinding bars. The sets of grinding bars of the drum may be made of a similar material to those of the rotor.

Means for facilitating circulation of the raw materials within the drum are also provided within the drum. As shown in Figure 1, a further motor 13 for recirculating ingredients within the drum is mounted adjacent a side wall 5' of the conche, the second motor being provided with a drive shaft 14 which extends into the drum through the side wall 5' thereof. An impeller 15 is mounted within the drum on the end of the drive shaft 14. In Figure 1, the impeller is shown as mounted through the opposite side wall to the main drive shaft carrying the rotor although the impeller may be mounted in any position within the drum in which the circulation of the products within the drum is effectively maintained.

The impeller of the preferred embodiment is provided with two blades 16, although further blades may be provided depending upon the raw materials to be refined within the drum. The drive shaft 14 of the recirculation motor is also provided with bearings 17 to facilitate rotation of the shaft of the motor through the side wall of the drum.

In use of the apparatus, raw materials such as sugar, cocoa liquor, vegetable fats and milk solids are loaded into the drum 2 via the hopper 7 provided in an upper portion 8 thereof. Once the drum is filled with the required volume and proportions of the raw materials (the volume is shown approximately by the dotted line in Figure 1), the main drive motor 3 is activated and the drive shaft 4 is rotated and hence the sets of grinding bars 11 on the arms 10 of the rotor 9 are caused to rotate within the drum thereby moving relative to the sets of lining bars 12 on the inner surface of the drum 2.

The recirculating motor 13 is then activated, thereby rotating the second drive shaft 14 and the impeller 15 mounted thereon. It is envisaged that the impeller will rotate at speeds of around 1400 rpm although the exact speed will depend upon the raw materials and the final product required. Rotation of the impeller 15 causes the mass of the raw materials within the drum to be recirculated within the drum in a direction transverse to the rotation of the rotor 9. This is shown by arrow A in Figure 1. Furthermore, recirculation of the mass of raw materials acts to force the mass between the sets of grinding bars and lining bars 11,12 on the ends of the arms of the rotor and the inner surface of the drum thereby reducing the ingredients to a paste and facilitating refining of the ingredients of the chocolate.

Also, the impeller 15 acts independently of the sets of grinding bars and lining bars 11,12 to provide an additional shearing action on the mass of the ingredients thereby providing for a double shear effect which breaks up the particles in the mass of ingredients more efficiently than with known apparatus. Breaking up of the particles of the raw ingredients releases volatile acids within the ingredients and prevents a build up of such acids in the final product which can lead to a reduction in the standard of the final product.

It will also be appreciated by the skilled person in this field that recirculating the mass of ingredient constantly within the drum 2 will reduce the harmful effects of "balling" within the final product. This is where fats surround other solids in the chocolate such as cocoa powder, sugar, milk powder etc, creating hard balls which will break down at a later stage in the refining process and thereby reduce the quality of the final product. With prior art apparatus, these balls have to be filtered out of the chocolate at a further cost. Also by providing a further shearing means within the drum, such balling of the ingredients is eliminated thereby reducing the time taken to refine the ingredients whilst increasing the quality of the refined product.

This leads to an overall reduction in the length of time that the apparatus has to be operated in order to refine ingredients satisfactorily thereby producing cost savings in the refining process.

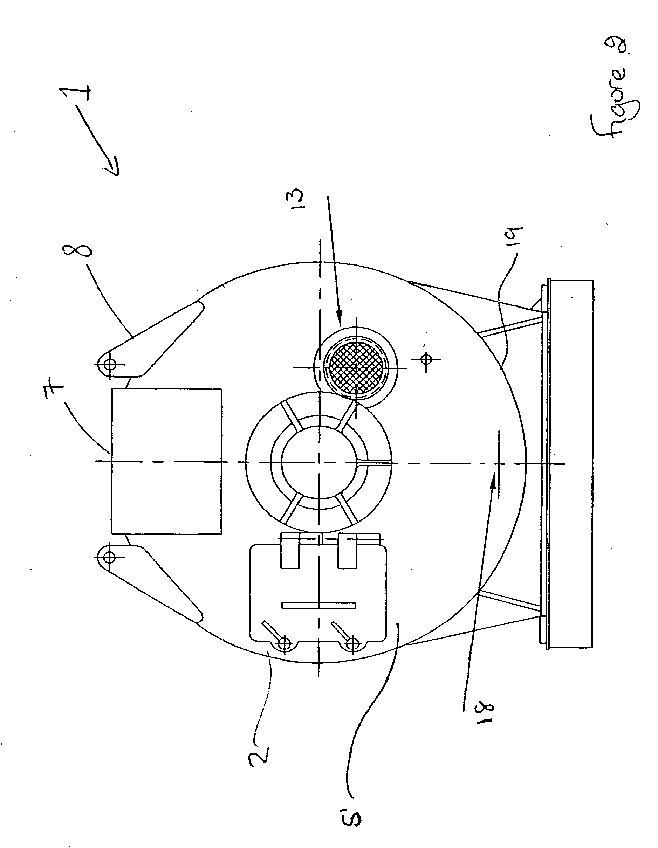

Once the refining operation is completed, the recirculating motor 13 and the main drive motor 3 are switched off and the refined product is removed from the drum via an outlet valve 18 in the bottom part 19 of the drum as shown in Figure 2.

A further aspect of providing the double shear operation within the drum 2 of the conche 1 is that materials such as nuts which may be added to the ingredients as raw materials can be ground up within the mixture without causing damage to the apparatus. The impeller 15 moves the ingredients including those such as nuts within the drum and forces the ingredients between the sets of grinding bars and lining bars 11,12 of the rotor 9 and the inner surface of the drum 2. This ensures that all of the ingredients within the drum are passed between the sets of grinding bars and lining bars and crushed to a fine paste. This is a significant advantage over known apparatus.

By carrying out the refining of ingredients more efficiently than with prior art apparatus, the above described apparatus can also be used to recycle finished products which have not met with the required quality standards. For example, with sugar coated chocolate where the integrity of the coating is compromised, previously such products would have been discarded as the cost of recycling them would outweigh the recovery costs due to the time taken to break down the coating from the chocolate. However, using the apparatus of the present invention recycling of such compromised products is possible. In such cases, the products to be recycled are introduced to the drum through the hopper 7 together with any additional raw materials which are required for the particular product in question. During operation of the apparatus, the double shear effect of the sets of grinding bars and lining bars 11,12 and the impellor 15 enables the compromised products to be reground quickly and efficiently thereby recovering up to 100% of such products and reducing or in some cases even eliminating wastage of the product.

As has been described above, by providing the double shear action within the conch, the mass of ingredients is kept moving during the refining process. Therefore it is also possible to consider the use of dryer ingredients such as chocolate crumb which has traditionally been avoided due to problems with the mass of raw materials drying out within the drum during refining.

Furthermore, the use of the impellor enables the apparatus to be used to great effect with raw ingredients to refine chocolate having a fat content of around 21% which is very desirable within the industry. With prior art apparatus such products were not readily available for use as the low fat content produced a dry product which was difficult to refine as described above.

It will be appreciated that an the motor 13, drive shaft 14 and impeller 15 as described above could be retro-fitted to existing chocolate refining machinery very quickly and easily thereby increasing the product lines that such existing machinery can currently produce.

The embodiments of the present invention hereinbefore described are given by way of example only and are not meant to limit the scope of the invention in any way.

## Claims

1. An apparatus for refining raw materials, particularly for use in the refining of chocolate, said apparatus comprising a drum (2) within which is mounted a drive shaft (4) carrying a rotor (9), said rotor being provided with at least one grinding bar (11), said drum being provided with at least one corresponding grinding bar (12) on the interior surface thereof and **characterised by** including an impeller (15) which acts independently of the grinding bars (11, 12) for recirculating and shearing the raw materials within the drum.

2. An apparatus according to claim 1, wherein the impeller comprises two blades (16).

3. An apparatus according to any one claims 1 or 2, wherein said impeller is mounted on the shaft (14) of a motor (13) which shaft passes through a side wall (5' ) of the drum.

4. An apparatus according to claim 3, wherein the shaft is mounted through bearings (17) providing a seal in the wall of the drum.

5. An apparatus according to any one of the preceding claims, wherein a microprocessor is provided to enable the operator to change the operating conditions of the apparatus to suit the final product required.

6. A method of refining ingredients for use in the manufacture of chocolate products, said method comprising the steps of placing the ingredients in a drum, said drum being provided with at least one grinding bar on the inner surface thereof and a rotor within the drum and an impellor which acts independently of the grinding bars, said rotor having at least one grinding bar provided thereon, shearing the ingredients by grinding them between the grinding bars on the rotor and the drum and causing the impeller to shear the ingredients while recirculating the ingredients within the drum in a direction transverse to the direction of rotation of the rotor.

## Patentansprüche

1. Eine Vorrichtung zum Raffinieren von Rohstoffen, insbesondere zur Verwendung beim Raffinieren von Schokolade, wobei die Vorrichtung eine Trommel (2) beinhaltet, innerhalb der eine einen Rotor (9) tragende Antriebswelle (4) montiert ist, wobei der Rotor mit mindestens einer Mahlstange (11) versehen ist, wobei die Trommel mit mindestens einer entsprechenden Mahlstange (12) auf der Innenoberfläche davon versehen ist, und **dadurch gekennzeichnet ist, dass** sie ein Flügelrad (15) umfasst, das unabhängig von den Mahlstangen (11, 12) zum Wieder-in-Umlauf-Bringen und Scheren der Rohstoffe innerhalb der Trommel wirkt.

2. Vorrichtung gemäß Anspruch 1, wobei das Flügelrad zwei Flügel (16) beinhaltet.

3. Vorrichtung gemäß einem der Ansprüche 1 oder 2, wobei das Flügelrad auf der Welle (14) eines Motors (13) montiert ist, wobei die Welle durch eine Seitenwand (5') der Trommel führt.

4. Vorrichtung gemäß Anspruch 3, wobei die Welle durch Lager (17) montiert ist, wodurch eine Abdichtung in der Wand der Trommel bereitgestellt wird.

5. Vorrichtung gemäß einem der vorhergehenden Ansprüche, wobei ein Mikroprozessor bereitgestellt wird, um der Bedienungsperson zu ermöglichen, die Betriebsbedingungen der Vorrichtung zu ändern, um zu dem benötigten Endprodukt zu passen.

6. Ein Verfahren zum Raffinieren von Zutaten zur Verwendung bei der Herstellung von Schokoladenprodukten, wobei das Verfahren die Schritte des Platzierens der Zutaten in einer Trommel, wobei die Trommel mit mindestens einer Mahlstange auf der inneren Oberfläche von dieser und einem Rotor innerhalb der Trommel und einem Flügelrad, das unabhängig von den Mahlstangen wirkt, versehen ist, wobei der Rotor mindestens eine Mahlstange, die auf diesem bereitgestellt ist, aufweist, des Scherens der Zutaten durch das Mahlen dieser zwischen den Mahlstangen auf dem Rotor und der Trommel und des Verursachens, dass das Flügelrad die Zutaten schert, während die Zutaten innerhalb der Trommel wieder in einer Richtung in Umlauf gebracht werden, die transversal zu der Richtung der Drehung des Rotors Ist, beinhaltet.

## Revendications

1. Un appareil destiné à affiner des matières premières, destiné en particulier à être utilisé pour l'affinage du chocolat, ledit appareil comprenant un tambour (2) au sein duquel est monté un arbre d'entraînement (4) portant un rotor (9), ledit rotor étant muni d'au moins une barre de broyage (11), ledit tambour étant muni d'au moins une barre de broyage correspondante (12) sur la surface intérieure de celui-ci et **caractérisé en ce qu'**il comporte une turbine (15) qui agit de façon indépendante des barres de broyage (11, 12) pour faire re-circuler et cisailler les matières premières au sein du tambour.

2. Un appareil selon la revendication 1, dans lequel la turbine comprend deux lames (16).

3. Un appareil selon une quelconque des revendications 1 ou 2, dans lequel ladite turbine est montée sur l'arbre (14) d'un moteur (13), lequel arbre passe à travers une paroi latérale (5') du tambour.

4. Un appareil selon la revendication 3, dans lequel l'arbre est monté à travers des roulements (17) apportant un scellement dans la paroi du tambour.

5. Un appareil selon une quelconque des revendications précédentes, dans lequel un microprocesseur est prévu pour permettre à l'opérateur de changer les conditions de fonctionnement de l'appareil pour les adapter au produit final requis.

6. Une méthode d'affinage d'ingrédients destinée à être utilisée dans la fabrication de produits chocolatiers, ladite méthode comprenant les étapes consistant à placer les ingrédients dans un tambour, ledit tambour étant muni d'au moins une barre de broyage sur la surface interne de celui-ci, d'un rotor au sein du tambour et d'une turbine qui agit de façon indépendante des barres de broyage, au moins une barre de broyage étant prévue sur ledit rotor, à cisailler les ingrédients en les broyant entre les barres de broyage sur le rotor et le tambour et à amener la turbine à cisailler les ingrédients tout en faisant re-circuler les ingrédients au sein du tambour dans une direction transversale à la direction de rotation du rotor.
